# EUROPÄISCHE PATENTSCHRIFT

(11) **EP 2 029 913 B1**
(45) Veröffentlichungstag und Bekanntmachung des Hinweises auf die Patenterteilung: **08.08.2012**
(21) Anmeldenummer: 07722532.4
(22) Anmeldetag: 14.06.2007
(51) Int. Cl.: F16G 13/16, H05F 3/00

(54) **GELENKELEMENT FÜR ENERGIEFÜHRUNGSKETTE**
ARTICULATED ELEMENT FOR A POWER SUPPLY CHAIN
ELEMENT D'ARTICULATION POUR CHAINE DE TRANSMISSION D'ENERGIE

(30) Priorität: 17.06.2006 DE 202006009482 U
(43) Veröffentlichungstag der Anmeldung: 04.03.2009
(73) Patentinhaber: igus GmbH, 51147 Köln (DE)
(72) Erfinder: BLASE, Günter, 51429 Bergisch Gladbach (DE)
(74) Vertreter: Stachow, Ernst-Walther
(86) Internationale Anmeldenummer: PCT/DE2007/001072
(87) Internationale Veröffentlichungsnummer: WO 2007/147394

(56) Entgegenhaltungen:
- WO-A-02/086349
- WO-A-2005/098265
- DE-A1-102004 022 938
- FR-A- 1 377 299

## Beschreibung

Die Erfindung betrifft ein Gelenkelement für eine Energieführungskette zur Führung von Schläuchen, Kabeln oder dergleichen mit einer Anzahl von Kettengliedern, die gegenüberliegende Seitenlaschen aufweisen, wobei an zumindest einigen der Seitenlaschen obere und untere Querstege vorgesehen sind, wobei das Gelenkelement mindestens zwei Haltebereiche aufweist, die mit zuordenbaren benachbarten oder beabstandeten Kettengliedern verbindbar sind, um diese jeweils gelenkig miteinander zu verbinden, so dass die Energieführungskette unter Bildung eines Untertrums, eines Umlenkbereichs und eines Obertrums ablegbar ist.

Weiterhin betrifft die Erfindung eine Energieführungskette zur Führung von Leitungen und Kabeln zwischen zwei Verbrauchern, von denen mindestens einer beweglich ist, wobei die Energieführungskette eine Vielzahl gelenkig miteinander verbundener Kettenglieder aufweist, die jeweils gegenüberliegende Seitenteile aufweisen und wobei an zumindest einigen oder sämtlichen der Kettenglieder die Seitenteile verbindende obere und/ oder untere Querstege vorgesehen sind, die einen Kabelführungskanal ausbilden, wobei die Kettenglieder jeweils über mindestens eine Gelenkverbindung miteinander verbunden sind, die eine Verschwenkung benachbarter Glieder zueinander unter Ausbildung eines Untertrums, eines Umlenkbereichs und eines Obertrums ermöglichen, und wobei die Glieder zumindest teilweise aus einem elektrisch leitfähigen Material bestehen, welches eine Ableitung von elektrischen Ladungen über zumindest einen Teil der Kettenlänge ermöglicht.

Es sind Energieführungsketten bekannt, welche für eine Verwendung in ESD-Schutzzonen gemäß EN 61340-5-1 oder gemäß anderen vergleichbaren technischen Normen ausgebildet sind. Bei derartigen Ketten erfolgt eine Ableitung elektrischer Ladungen über die Kette, um für den jeweiligen Anwendungsfall störende elektrostatische Aufladungen zu vermeiden, beispielsweise bei der Herstellung elektronischer Bauteile.

Energieführungsketten mit Gelenkelementen der eingangs geneannten Art sind z.B. aus der WO 2005/098265 A bekannt. Die Gelenkelemente derartiger Energieführungsketten müssen nicht nur die ansonsten üblichen hohen mechanischen Belastungen wie Zug-, Biege- und/oder Torsionsbeanspruchungen, insbesondere bei hoher Lastzahl standhalten sowie eine sehr hohe Lebensdauer aufweisen, sie müssen zudem noch eine möglichst gute Ableitung der elektrischen Ladungen ermöglichen oder es müssen zusätzliche Ableitungselemente vorgesehen sein. Es besteht nach wie vor der Bedarf, Energieführungsketten und Gelenkelemente bereitzustellen, die diese teilweise einander widersprechenden Anforderungsprofile besonders optimal erfüllen. So kann beispielsweise die elektrische Leitfähigkeit der Gelenkelemente durch elektrisch leitfähige Füllstoffe wie Graphit, Metallpulver oder dergleichen erhöht werden, dies beeinflusst jedoch deren mechanische Eigenschaften wie Elastizität, Bruchfestigkeit, Zugfestigkeit usw. der Gelenkelemente negativ. Elektrisch leitfähige Beschichtungen der Gelenkelemente, die beispielsweise durch Aufdampfen hergestellt werden, weisen auf dem Kunststoffmaterial des Gelenkelementes zumeist eine nur geringe oder nicht ausreichende Haftfestigkeit und Leitfähigkeit auf und sind gegen Beschädigungen sehr empfindlich. Die Montage der Gelenkelemente bzw. ein Austausch derselben ist somit mit Schwierigkeiten verbunden. Die Anordnung separater Ableitungen ist sehr aufwändig.

Der Erfindung liegt somit die Aufgabe zugrunde, eine Energieführungskette zu schaffen, die auch bei sehr hohen mechanischen Belastungen eine lange Lebensdauer aufweist, die in ESD-Schutzzonen einsetzbar ist und eine besonders niedrige Neigung zu elektrostatischen Aufladungen aufweist. Des Weiteren besteht die Aufgabe darin, ein Gelenkelement für eine derartige Energieführungskette bereitzustellen.

Die Aufgabe wird durch eine Energieführungskette sowie ein entsprechendes Gelenkelement nach den unabhängigen Ansprüchen 1 und 13 gelöst. Vorteilhafte Ausführungsformen ergeben sich aus den Unteransprüchen.

Dadurch, dass das Gelenkelement mit einem zusätzlichen Überbrückungselement versehen ist, welches sich durchgehend zwischen den beiden Haltebereichen des Gelenkelementes erstreckt und in Längsrichtung und/oder in der Höhe, d. h. nach oben oder nach unten, und/oder seitlich von dem Gelenkelement vorsteht und über die vorstehenden Bereiche mit den beiden Kettengliedern, die den beiden Haltebereichen zuordenbar sind, elektrisch kontaktierend verbindbar ist, kann eine Energieführungskette bereitgestellt werden, die besonders hohen mechanischen Belastungen ausgesetzt werden kann und eine besonders schnelle und vollständige Abführung von elektrostatischen Aufladungen ermöglicht.

Dadurch, dass das Überbrückungselement von dem Gelenkelement in dessen Längsrichtung und/oder in der Höhe und/oder seitlich desselben vorsteht, ist an diesen Stellen eine besonders einfache elektrische Kontaktierung mit den jeweiligen Kontaktbereichen des Kettengliedes möglich. Hierbei ist es ausreichend, wenn das Überbrückungselement lediglich von Teilbereichen des Gelenkelementes vorsteht, beispielsweise im Bereich des Haltebereichs.

Die vorstehenden Bereiche können unterschiedliche Geometrien aufweisen.

Allgemein ist der Kontaktierungsbereich jeweils vorzugsweise derart angeordnet, dass er zum Ketteninneren und/oder Kettenäußeren hin von dem Gelenkelement und/oder von dem angrenzenden oder benachbarten Bereich des diesem zugeordneten Kettengliedes mechanisch abgeschirmt und geschützt ist. Die mechanische Abschirmung kann durch eine dem Ketteninneren oder Kettenäußeren zu- oder abgewandte Innen- oder Außenseite der Seitenlaschen der Kettenglieder und/oder dem Ketteninneren oder Kettenäußeren zugewandten Ober- oder Unterseite der Querstege und/oder der in Montageanordnung angeordneten Unter- und/oder Oberseite eines die Kettenglieder verbindenden Gelenkelementes erfolgen. Das Überbrückungselement kann somit an einem Bereich von Seitenlasche oder Quersteg anliegen oder von diesem abgeschirmt sein, der innerhalb des genannten Bauteils angeordnet ist. Alternativ kann das Überbrückungselement in das Gelenkelement, die Seitenlaschen und/oder die Querstege eingebettet sein.

Vorzugsweise ist das Überbrückungselement an dem Gelenkelement befestigt, so dass das Überbrückungselement vormontiert ist oder beide Elemente als bauliche Einheit handhabbar und an den Kettengliedern befestigbar sind. Das Überbrückungselement kann formschlüssig und/oder kraftschlüssig und/oder stoffschlüssig an dem Gelenkelement festgelegt sein. Beispielsweise kann das Überbrückungselement zumindest teilweise oder über dessen gesamte Länge in rillenartigen Vertiefungen des Gelenkelementes unter Ausbildung einer kraft- und/oder formschlüssigen Verbindung eingelegt sein. Gegebenenfalls kann das Überbrückungselement auch - ausgenommen die Kontaktierungsbereiche - von dem Gelenkelement umschlossen sein, beispielsweise durch Umspritzen, wenn das Gelenkelement in einem Spritzgussverfahren hergestellt wird.

Besonders bevorzugt sind bei einer Verschwenkung der Kettenglieder gegeneinander die Kontaktierungsbereiche des Überbrückungselementes gegenüber den Kettengliedern, die durch das Gelenkelement verbunden werden, lageunveränderlich. Besonders bevorzugt sind bei einer Verschwenkung der Kettenglieder gegeneinander die Haltebereiche der Gelenkelemente gegenüber den diese verbindenden lageunveränderlich.

Vorzugsweise sind in Montageanordnung des Gelenkelementes Überbrückungselemente an der Ober- und Unterseite des Gelenkelementes vorgesehen, die mit dem Kettenglied jeweils elektrisch kontaktierend verbindbar bzw. verbunden sind. Hierdurch ist eine besonders günstige Ableitung der elektrostatischen Aufladungen von dem oberen und unteren Bereich des jeweiligen Kettengliedes gewährleistet. Zudem können die Überbrückungselemente kleiner dimensioniert sein, als bei lediglich einseitiger Anordnung an dem Gelenkelement, so dass auch zugeordnete Vertiefungen des Gelenkelementes zur Aufnahme korrespondierender Überbrückungselemente kleiner bemessen sein können, was die mechanische Stabilität und Langlebigkeit des Gelenkelementes erhöht.

Vorzugsweise sind an Ober- und Unterseite des Gelenkelementes angeordnete Überbrückungselemente versetzt zueinander angeordnet, wodurch die mechanische Stabilität desselben erhöht wird. Unabhängig hiervon können die Anzahl und/oder die Querschnittsfläche der an Ober- und Unterseite des Gelenkelementes angeordneten Überbrückungselemente verschieden sein, insbesondere wenn das Gelenkelement nicht auf halber Höhe der Seitenteile angeordnet ist, so dass ober- und unterhalb des Gelenkelementes elektrostatische Aufladungen in unterschiedlichem Ausmaß auftreten können. Es versteht sich, dass der höheren Bereich der Lasche eine größere Anzahl und/oder im Durchmesser größer dimensionierte Überbrückungselemente zugeordnet sein können.

Das Überbrückungselement kann ferner zugleich zur seitlich verschiebungssicheren Festlegung des Gelenkelementes an dem Kettenglied, insbesondere an den Seitenlaschen desselben, dienen. Dies kann auch zusätzlich zu anderen diesbezüglichen Befestigungsmitteln wie Rast- und/oder Reibschlussmitteln erfolgen. Beispielsweise kann das Überbrückungselement in einer in Kettenquerrichtung geschlossenen Ausnehmung des Gelenkelementes angeordnet sein, beispielsweise in einer nach oben bzw. unten hin offenen Nut oder Rille, wobei an dem gegenüberliegenden Verbindungsbereich der Seitenlasche ebenfalls eine Vertiefung zur Aufnahme des Überbrückungselementes angeordnet sein kann, die zusammen einen Aufnahmeraum für dieses bilden können. Zugleich wird hierdurch ein besonders guter elektrischer Kontakt hergestellt.

Das Überbrückungselement kann als Draht oder Band ausgeführt sein. Das Überbrückungselement kann einen Durchmesser oder eine Höhe von ≥ 0,05 mm oder ≥ 0,1-0,2 mm oder gegebenenfalls auch ≥ 0,3 mm, beispielsweise ca. 0,5 mm, aufweisen, vorzugsweise aber ≥ 0,6-0,8 mm oder ≤ 1-2 mm aufweisen. Gegebenenfalls kann das Überbrückungselement auch aus mehreren sich nebeneinander erstreckenden Teilelementen aufgebaut sein, z.B. in Art eines Drahtes aus mehreren Litzen, um eine gewünschte Biegesteifigkeit zu erzielen.

Das Gelenkelement kann lediglich zwei oder auch mehrere Kettenglieder miteinander gelenkig verbinden und sich vorzugsweise über die gesamte Länge der Energieführungskette erstrecken. Entsprechendes gilt auch für eine elektrisch leitende Verbindung der Kettenglieder der Energieführungskette durch das Überbrückungselement. Gelenkelement und Überbrückungselement können sich hierbei auch über eine unterschiedliche Anzahl von Kettengliedern erstrecken bzw. diese elektrisch leitend miteinander verbinden. So kann ein sich über mehrere Kettenglieder oder die gesamte Kette erstreckendes Gelenkelement mehrere in Kettenlängsrichtung hintereinander angeordnete Überbrückungselemente umfassen, welche jeweils nur eine geringere Anzahl bzw. Gruppen von Kettengliedern elektrisch leitend miteinander verbinden, beispielsweise nur jeweils benachbarte Glieder.

Verbindet das Gelenkelement jeweils mehr als zwei Kettenglieder miteinander, so können jeweils zwischen den Haltebereichen der Gelenkelemente, mit denen diese an den beiden benachbarten Kettengliedern verbunden sind, Verbindungsbereiche vorgesehen sein, die eine geringere Breite als die Laschen und/oder als die elastisch deformierbaren Bereiche der Gelenkelemente aufweisen. Hierdurch können die sich über mehrere Laschen erstreckenden Gelenkelemente einteilig gehandhabt werden. Die Verbindungsbereiche können im Querschnittsbereich der Laschen angeordnet sein. Die Überbrückungselemente werden vorzugsweise von den Verbindungsbereichen unterstützt oder von diesen umschlossen. Die ober- und unterhalb der Gelenkelemente angeordneten Bereiche der Laschen können hierbei durch einen Steg verbunden sein, so dass die Laschen einstückig ausgebildet sind.

Das Überbrückungselement kann jeweils auch von dem Gelenkelement über eine Teillänge bzw. eine Vielzahl von Abschnitten oder aber über praktisch dessen gesamte Länge umschlossen sein, beispielsweise indem das Gelenkelement um das Überbrückungselement umspritzt ist. Es hat sich hierbei herausgestellt, dass durch diese Anordnung auch die Lebensdauer des Überbrückungselementes erhöht ist, da Biege- und/oder Torsionsbelastungen aufgrund der Verfahrung der Energieführungskette von dem Gelenkelement aufgefangen werden.

Die Laschen und die Gelenkelemente können aus unterschiedlichen Materialien, insbesondere aus unterschiedlichen Kunststoffmaterialien, bestehen. Die elastischen Eigenschaften des Gelenkelementes sind vorzugsweise so eingestellt, dass das Gelenkelement bei jeder bestimmungsgemäßen Biegebeanspruchung im elastischen Bereich bleibt und bei einer Deformation elastische Rückstellkräfte auf die durch das Gelenkelement verbundenen Laschen ausübt. Das Material der Laschen kann eine besonders hohe Formstabilität (gegen Zug-, Torsions- und/oder Druckkräfte) und hohe Biegesteifigkeit der Laschen und auch der Kettenglieder insgesamt gewährleisten. Das Material kann besonders eine niedrige Gleitreibung aufweisen, was eine Verfahrung der Energieführungskette mit auf dem Untertrum gleitendem Obertrum erleichtert.

Bei separater Ausführung von Laschen und Gelenkelementen können die Laschen so ausgebildet sein, dass sie nahezu sämtliche auf die gestreckte Energieführungskette in Längsrichtung wirkenden Druck- und Zugkräfte aufnehmen, während die Funktion der Gelenkelemente sich ausschließlich auf die Bildung von Gelenkverbindungen ohne nennenswerte Beanspruchung durch Druck- und Zugkräfte beschränkt.

Vorzugsweise erstreckt sich das Gelenkelement gänzlich zwischen der inneren und äußeren Seitenfläche der Laschen. Die Breite der Gelenkelemente kann genau der Breite der Laschen auf Höhe der Gelenkelemente entsprechen oder diese können eine geringere oder größere Breite aufweisen.

Die Kettenglieder können jeweils einen oberen und unteren Quersteg aufweisen, die den Zwischenraum der gegenüberliegenden Laschen nach außen abgrenzen, wobei einer der Querstege auch als geteilter Quersteg ausgeführt sein kann. Es können auch nicht mit Querstehen versehene Kettenglieder vorgesehen sein. Vorzugsweise ist zumindest einer der Querstege biegesteif ausgeführt und biegesteif an den gegenüberliegenden Laschen befestigt.

Das Gelenkelement kann bei in Montageanordnung langgestreckter Energieführungskette in der Höhe zwischen dem oberen und unteren Quersteg, falls vorhanden, oder den Befestigungselementen für Querstege und in der Höhe von den Querstegen beabstandet angeordnet sein, insbesondere in einem mittleren Bereich der Laschenhöhe, der von der Unterkante der Laschen um mehr als ein Viertel der Laschenhöhe beabstandet ist. Insbesondere kann das Gelenkelement auf halber Höhe der Laschen angeordnet sein. Hierdurch können die Kettenglieder symmetrisch zu der neutralen Faser der Energieführungskette angeordnet sein, wobei die neutrale Faser bei der Umlenkbewegung der Kette aus der gestreckten in die gekrümmte Anordnung keine Längenänderung erfährt. Die geführten Leitungen werden so bei der Abwinkelungsbewegung der Energieführungskette gleichmäßiger beansprucht.

Besonders bevorzugt sind die Gelenkelemente als Federelemente ausgeführt, die bei einer Abwinkelung der Kettenglieder aus der Stellung bei langgestreckter Energieführungskette elastische Rückstellkräfte auf die benachbarten Kettenglieder ausüben. Vorzugsweise wird durch die elastischen Rückstellkräfte eine Rückstellbewegung der Kettenglieder über den gesamten Verschwenkwinkel der Kettenglieder ausgeübt. Die Rückstellkräfte können eine selbsttätige Rückstellbewegung der Kettenglieder bis in deren Anschlagstellung bei langgestreckter Energieführungskette bewirken. Dies kann für die unbeladene als auch für eine teilweise oder für die maximal beladene Energieführungskette gelten.

Die Gelenkelemente und/oder Überbrückungselemente können vielgestaltig ausgeführt sein. Sie können zwischen den Haltebereichen einen sich ändernden Querschnitt und/oder Bereiche unterschiedlicher Materialstärke aufweisen. Der Querschnitt und/oder die Materialstärke können mit Abstand von den Haltebereichen zunehmen und z.B. im mittleren Bereich des Gelenkelementes maximal sein, oder auch abnehmen oder andersartig variieren. Insbesondere die Gelenkelemente können in dem mittleren Bereich auch eine Materialschwächung aufweisen. Die Änderung des Querschnittes und/oder der Materialstärke erfolgen vorzugsweise in der Hauptebene der zugehörigen Kettenlaschen. Hierdurch können die Verfahreigenschaften der Energieführungskette eingestellt werden, z.B. die zur Abwinkelung der Laschen erforderliche Kraft. Auch die Überbrückungselemente können eine sich über deren Länge ändernde Querschnittsgestalt aufweisen, z.B. um deren elektrische Leitfähigkeit und/oder mechanischen Eigenschaften anzupassen. Dies ist insbesondere bei austauschbaren Gelenkelementen von Bedeutung.

Die Kettenglieder können jeweils mit Anlageflächen versehen sein, die über den gesamten Verschwenkwinkel fortwährend an dem Gelenkelement und/oder an dem Überbrückungselement angreifen. Vorzugsweise ist das Gelenkelement im Presssitz zwischen den zugeordneten Anlageflächen der Laschen angeordnet, wozu die Laschen mit schlitzförmigen Aufnahmen versehen sein können. Die Anlageflächen der Laschen sowie die korrespondierenden Flächen des Gelenkelementes stellen vorzugsweise ebene Flächen dar, deren Flächennormalen parallel zur inneren und äußeren Seitenfläche der Laschen liegen und die bei langgestreckter Energieführungskette senkrecht zur Längsrichtung derselben stehen. Vorzugsweise ist zugleich auch das Überbrückungselement mit einer Presskraft gegen das Gelenkelement beaufschlagt, wobei Presskraft im Wesentlichen durch die Anlageflächen der Laschen ausgeübt werden kann, die sonst das Gelenkelement kraftbeaufschlagen.

Das Gelenkelement kann als plattenartiges Bauteil ausgeführt sein, was auch ein bandförmiges Bauteil sein kann. Das Gelenkelement kann beispielsweise im Wesentlichen ebene Ober- und Unterseiten aufweisen, die den Ober- und Unterseiten der Laschen zugewandt sind. Vorzugsweise liegen die Kettenlaschen mit Bereichen an der Ober- und/oder Unterseite der ebenen Bereiche der Gelenkelemente an. Das Gelenkelement kann auch als in der Ebene parallel zu der inneren und äußeren Seitenfläche der Laschen gekrümmtes Bauteil ausgebildet sein, so dass es bei in Längsrichtung geradem Einbau in die Laschen eine Vorspannung in einer Abwinkelungsrichtung bewirkt, oder andere geeignete Querschnitte aufweisen. Das Überbrückungselement kann ebenfalls gekrümmt oder geradlinig sein.

Das Gelenkelement kann mit Haltebereichen an beiden benachbarten Seitenlaschen angreifen, die in Längsrichtung der Energieführungskette wirkende Zugkräfte aufnehmen. Hierzu kann das Gelenkelement an den benachbarten Laschen kraft-, form- und/oder stoffschlüssig befestigt sein. Die zugaufnehmende Befestigung der Gelenkelemente an den Laschen kann derart ausgeführt sein, dass diese lediglich für geringe Zugkräfte ausgelegt ist, beispielsweise um die Montage der Energieführungskette zu erleichtern. Hierzu können die Haltebereiche der Gelenkelemente, vorzugsweise an den freien, den elastisch deformierbaren Bereichen abgewandten Enden derselben, ober- und unterseitige Vorsprünge aufweisen, die sich über die gesamte Breite der Gelenkelemente erstrecken können. Zur Aufnahme höherer Zugkräfte können bei Bedarf zusätzliche zugaufnehmende Mittel vorgesehen sein.

Vorzugsweise sind die Gelenkelemente in Ausnehmungen der Kettenlaschen angeordnet. Die Ausnehmungen sind vorzugsweise stirnseitig in Richtung auf die benachbarte Lasche, die durch das jeweilige Gelenkelement verbunden wird, geöffnet. Zusätzlich oder alternativ hierzu und unabhängig von der Länge der Gelenkelemente können die die Gelenkelemente aufnehmenden Ausnehmungen an den Kettenlaschen an den Seitenflächen, die dem Energieführungsketteninneren zu- und/oder abgewandt sind, hin geöffnet sein, so dass die Gelenkelemente in einer Richtung quer, vorzugsweise senkrecht, zu der Hauptebene bzw. den Seitenflächen der Laschen in die Ausnehmungen einführbar und an den Laschen befestigbar sind.

Das Gelenkelement kann durch kraftschlüssige, formschlüssige und/oder stoffschlüssige Verbindung mit den Laschen gegen eine Demontage von den Laschen senkrecht zur Hauptebene der Laschen und/oder gegen eine Verdrehung quer zu den Laschen an diesen gesichert sein, insbesondere wenn das Gelenkelement in einer seitlich offenen Ausnehmung der Laschen angeordnet ist.

Vorzugsweise weist jeweils zumindest eine, vorzugsweise beide, der jeweils benachbarten Laschen an der der benachbarten Lasche zugeordneten Stirnseite auf Höhe des Gelenkelementes eine stirnseitig offene Ausnehmungen auf, durch die sich das Gelenkelement erstreckt. Die Ausnehmung erstreckt sich zumindest ausgehend von der gestreckten Anordnung der Energieführungskette auf der der Abwinkelungsrichtung der Glieder zugewandten Seite der Gelenkelemente, vorzugsweise beidseitig der Gelenkelemente. Hierdurch wird eine Verbiegung des Gelenkelementes ermöglicht, bei welchem der mittlere Bereich des elastisch deformierbaren Bereichs des Gelenkelementes einen geringfügigen Höhenversatz gegenüber den beiden benachbarten Laschen während der Verschwenkbewegung durchführt.

Die einander benachbarten Laschen weisen vorzugsweise zusammenwirkende Mittel auf, die auf die Energieführungskette wirkende Druck- und/oder Zugkräfte aufnehmen. Hierdurch erfolgt eine Druck- und/oder Zugentlastung der Verbindungsbereiche der Gelenkelemente mit den Laschen und somit auch der Überbrückungselemente. Vorzugsweise sind die druck- und/oder zugkraftaufnehmenden Mittel als korrespondierende Vorsprünge und hinterschnittene Bereiche ausgebildet, insbesondere in Form von Ausnehmungen der benachbarten Laschen. Die zug- und/oder druckaufnehmenden korrespondierenden Bereiche der benachbarten Laschen können auch als korrespondierende Anschläge zur Begrenzung des Verschwenkwinkels der benachbarten Kettenglieder zueinander ausgeführt sein.

Das Gelenkelement kann alternativ auch als Gelenkband ausgeführt sein, welches an den Querstegen der Kettenglieder befestigt ist, beispielsweise an der innen- oder außen liegenden Seite derselben, oder allgemein an den Unterseiten der Kettenglieder. Das Gelenkelement kann hierbei derart ausgebildet sein, dass bei Ablage des Obertrums auf dem Untertrum das Gelenkband als Auflage dient und somit letztlich auf sich selbst abgelegt ist. Das Überbrückungselement ist vorzugsweise an der dem Quersteg zugewandten Seite des Gelenkelementes angeordnet und mit diesem elektrisch kontaktierend verbunden und somit von dem Gelenkelement durch äußere Einwirkungen abgeschirmt.

Gegebenenfalls kann das Überbrückungselement eine größere tatsächliche Länge aufweisen, als der zugeordnete Abschnitt des Gelenkelementes, beispielsweise in Form von schlaufenförmig oder mäanderförmig um das Gelenkelement geführten Umlenkbereichen. Hierdurch können bei einer Verfahrung der Energieführungskette wirkende Längenänderungen des Überbrückungselementes aufgefangen werden, wodurch dessen Lebensdauer erhöht wird. Dies gilt insbesondere auch bei torsionsbeanspruchten Gelenkelementen, wobei das Überbrückungselement das Gelenkelement auch spiralförmig umgeben kann. Das Gelenkelement kann hierbei beispielsweise als Art Gelenkzapfen ausgebildet sein, dessen Endbereiche verdrehfest an den Seitenlaschen benachbarter, vorzugsweise überlappender, Glieder angeordnet sind.

Generell kann das Überbrückungselement lösbar an dem Gelenkelement befestigt sein, gegebenenfalls aber auch einteilig mit diesem verbunden sein.

Vorzugsweise ist die Verbindung von Gelenk- und Überbrückungselement derart ausgebildet, dass diese unter fortwährendem Kontakt zwischen diesen Längenänderungen zumindest eines der beiden Elemente ausgleichen kann, beispielsweise durch geeignete Ausbildung einer kraftschlüssigen Verbindung.

Die Erfindung wird nachfolgend beispielhaft beschrieben und anhand der Figuren beispielhaft erläutert. Es zeigen:
- Fig. 1: eine perspektivische Darstellung einer erfindungsgemäßen Energieführungskette,
- Fig. 2: eine Detailansicht der Laschen der Energieführungskette nach Figur 1,
- Fig. 3: eine perspektivische Darstellung einer weiteren Ausführungsform einer erfindungsgemäßen Energieführungskette,
- Fig. 4: Seitenansichten und stirnseitige Ansichten von Gelenkelementen verschiedener Ausführungsformen,
- Fig. 5: eine Seitenansicht (Fig. 5a) und eine Schnittdarstellung (Fig. 5b) einer weiteren Ausführungsform einer erfindungsgemäßen Energieführungskette.

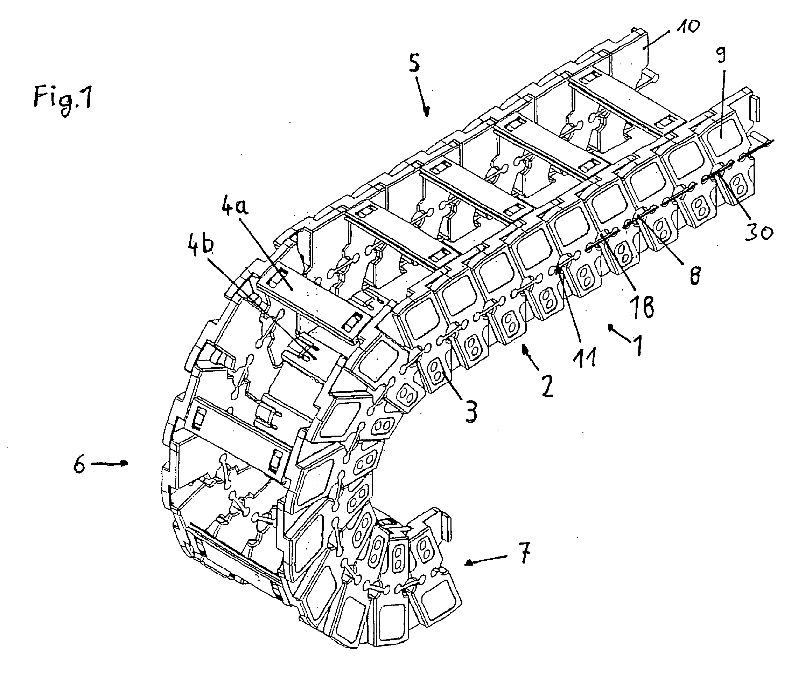

Die in Figur 1 gezeigte erfindungsgemäße Energieführungskette 1 besteht aus einer Vielzahl gelenkig miteinander verbundener Kettenglieder 2, die jeweils aus zwei parallel zueinander angeordneten, spiegelsymmetrisch zueinander ausgeführten Laschen 3 bestehen, welche durch jeweils einen oberen und unteren Quersteg 4a,4b miteinander verbunden sind. Die Querstege 4a, 4b können durch Rastmittel lösbar an den Laschen 3 befestigt sein. Durch die formstabilen Laschen und zumindest einen biegesteifen Quersteg, der stabil an den Laschen befestigt ist, werden formstabile, verdreh- und torsionssteife Kettenglieder gebildet. Zumindest einer der Querstege kann zumindest teilweise das Innere der Energieführungskette freigeben, um die zu führenden Schläuche, Kabel oder dergleichen in dem durch die Laschen und Querstege definierten Führungskanal der Energieführungskette anzuordnen. Die dargestellte Energieführungskette kann bogenförmig unter Bildung eines Untertrums 5, von dem lediglich eine Lasche des ersten Kettengliedes dargestellt ist, einem Umlenkbereich 6 und einem Obertrum 7 angeordnet werden.

Die Kettenglieder 2 sind durch Gelenkelemente 8 miteinander verbunden, die hier jeweils genau zwei einander benachbarte Laschen 3 gelenkig miteinander verbinden. Die Gelenkelemente 8 sind als im Wesentlichen plattige Bauteile ausgeführt, die sich über die gesamte Breite der Laschen 3 erstrecken und bündig mit den innen und außen liegenden Seitenflächen 9, 10 abschließen. Breite und Länge der elastisch deformierbaren Bereiche der Gelenkelemente 8 beträgt hierbei ein Mehrfaches deren Stärke.

Die Gelenkelemente 8 sind in seitlich offenen Ausnehmungen 11 der Laschen 3 angeordnet, die zur inneren und/oder äußeren Seitenfläche 9, 10 hin offen ausgeführt sein können. Die Gelenkelemente 8 können somit seitlich zu den Laschen 3 in die Ausnehmungen 11 eingeführt und in diesen festgelegt werden. Das Gelenkelement 8 ist in Abwinkelungsrichtung der Kettenglieder unter Ausübung einer Rückstellkraft elastisch deformierbar und wirkt in Art einer Blattfeder. Das Gelenkelement kann gegebenenfalls aber auch im Wesentlichen keine Rückstellkräfte ausüben.

Der mittlere elastisch deformierbare Bereich 12 der Gelenkelemente 8 grenzt beidseitig an die Haltebereiche 13 an, die passgenau an den die Ausnehmung 11 begrenzenden Flächen 14 der Laschen 2 anliegen. Die Haltebereiche 13 weisen auf der dem mittleren Bereich 12 abgewandten Seite Querschnittserweiterungen 15 auf, die eine Hinterschneidung der Lasche hintergreifen, so dass die Gelenkelemente gegen Längsverschiebung gesichert in der Ausnehmung 11 angeordnet sind. Die Gelenkelemente können Zugkräfte aufnehmen. Unabhängig hiervon sind die Gelenkelemente gegen eine Verschwenkung quer zu den Laschen gesichert, wozu ebenfalls Formschlussmittel vorgesehen sind, die hier ebenfalls durch die Querschnittserweiterung 15, die sich über die gesamte Breite der Gelenkelemente erstreckt, bereitgestellt werden. Ferner können die Haltebereiche 13 der Gelenkelemente mit den Laschen zusammenwirkende Formschlussmittel aufweisen, die die Gelenkelemente 8 gegen eine Querverschiebung zu den Laschen 2 sichern. Der Haltebereich des Gelenkelementes einschließlich der Querschnittserweiterung wird eng bzw. im Presssitz von der Lasche umschlossen.

Das Gelenkelement kann durch eine geeignete Ausgestaltung der Laschen von in Kettenlängs- und/oder Querrichtung wirkenden Zug- und/oder Druckkräften praktisch vollständig entlastet sein oder diese selber zumindest teilweise aufnehmen. Die Zugkraft aufnehmenden Mittel der Laschen können als einander hintergreifende Vorsprünge bzw. Hinterschneidungen ausgeführt sein. Das Gelenkelement ist auf halber Höhe der Laschen 2 angeordnet, gegebenenfalls auch außermittig. Die Laschen 2 und die als separate Bauteile ausgeführten Gelenkelemente 8 bestehen aus unterschiedlichen Kunststoffmaterialien. An den Stirnseiten der Laschen sind auf Höhe der Gelenkelemente 8 stirnseitig offene Ausnehmungen 18 vorgesehen. Der die Ausnehmung 18 begrenzende Rand 19 der Lasche weist ober- und unterhalb des Gelenkelementes 8 einen Abstand zu diesem auf, so dass eine Biegung des Gelenkelementes über einen größeren Biegeradius möglich ist. Zur Ableitung elektrostatischer Aufladungen sind an den Gelenkelementen Überbrückungselemente 30 angeordnet bzw. befestigt oder in diesen integriert, wobei nur einige derselben dargestellt sind.

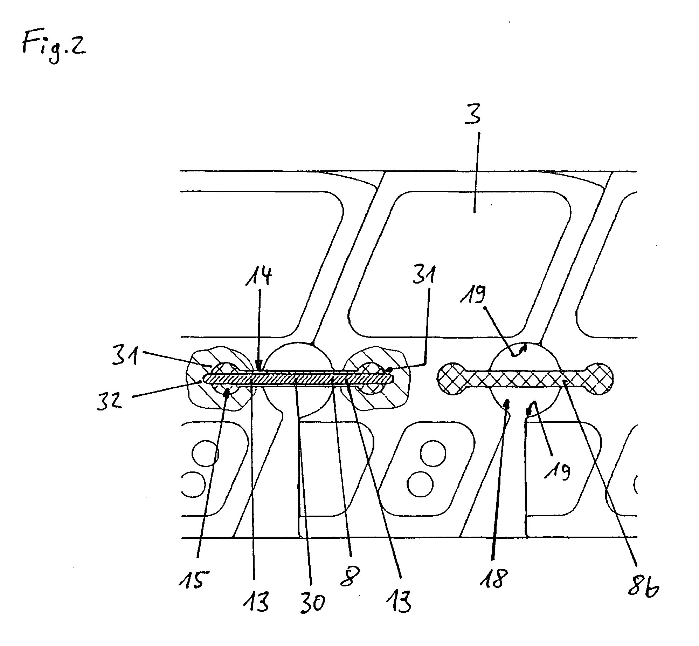

In Figur 2 ist schematisch ein Abschnitt der Energieführungskette nach Figur 1 mit Gelenkelementen 8, 8b dargestellt, wobei das Gelenkelement 8 mit einem zwischen den beiden Haltebereichen 13 angeordneten Überbrückungselement 30 ausgebildet ist, welches an den beiden Stirnseiten 31 des Gelenkelementes vorsteht und mit dem angrenzenden Bereich 32 der Seitenlaschen 2 elektrisch kontaktierend verbunden ist. Das Überbrückungselement ist hier aus Metall gefertigt. Zum Vergleich ist das Gelenkelement 8b ohne Überbrückungselement dargestellt.

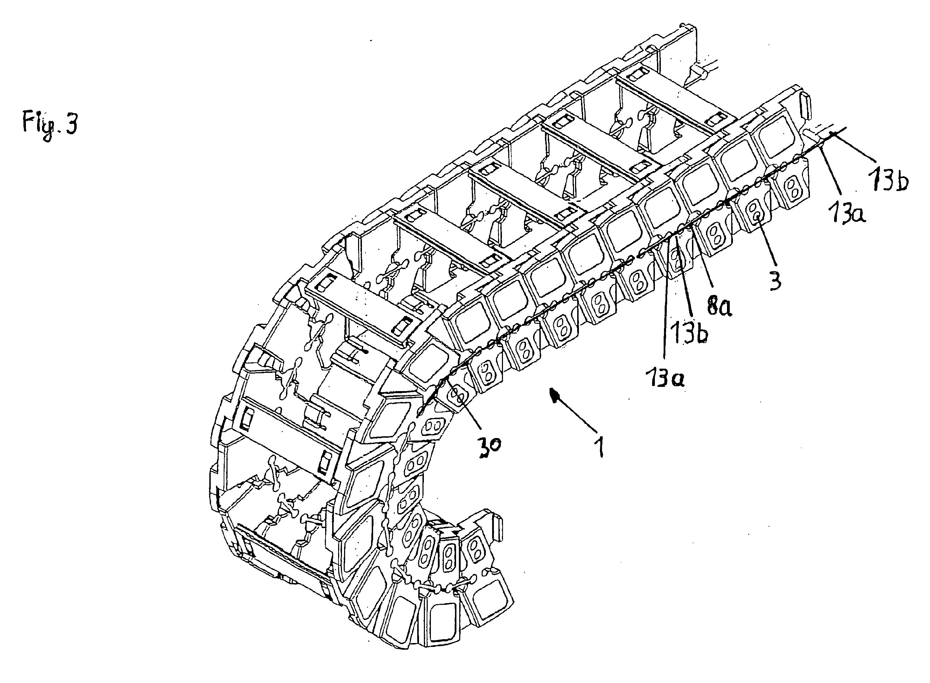

Figur 3 zeigt eine Abwandlung der Energieführungskette nach Figur 1, wobei sich jetzt hier das Gelenkelement 8a über mehrere Laschen in Kettenlängsrichtung erstreckt und diese gelenkig miteinander verbindet. Zwischen den Haltebereichen 13a der Gelenkelemente 8a sind Verbindungsbereiche 13b vorgesehen, die eine geringere Breite als die Haltebereiche 13a aufweisen und in Nuten der Laschen angeordnet sind. Eine Vielzahl von Gelenkelementen 8a ist vorgesehen, um die Laschen eines Laschenstranges miteinander zu verbinden. Es versteht sich, dass sich hierbei Gelenk- und Überbrückungselement auch über die gesamte Kettenlänge erstrecken können. Die elektrische Ableitungen bildenden Überbrückungselemente 30 erstrecken sich über mehrere Glieder und sind vorzugsweise auf Höhe der Verbindungsbereiche 13b angeordnet. Sie können von diesen unterstützt oder umschlossen werden.

Die kontaktierenden Bereiche 37 des Überbrückungselementes sind hierbei bei einer Verschwenkbewegung der Kettenglieder zueinander gegenüber den jeweiligen Kontaktierungsbereichen derselben lageunveränderlich. Die Haltebereiche des Gelenkelementes und die von diesen vorstehenden und/oder oberflächlich austretenden Kontaktierungsbereiche der Überbrückungselemente stehen während der Verschwenkbewegung der Glieder in fortwährendem Kontakt mit diesen, beispielsweise mit den Laschen oder Querstegen derselben, wobei der Kontakt ausreichend ist, um eine elektrische Ableitung von Ladungsträgern zu ermöglichen. Es versteht sich, dass die Überbrückungselemente geeignet ausgeführt sein können, um auch auf Höhe der Querschnittserweiterungen 15 eine elektrische Ableitung zu den Kettengliedern bzw. den Seitenteilen derselben zu ergeben.

Besonders vorteilhaft sind somit Gelenkelement und Überbrückungselement derart aneinander angepasst, dass diese als bauliche Einheit mit den jeweiligen Kettengliedern verbindbar sind. Gelenkelement und Überbrückungselement können hierbei vormontiert oder dauerhaft miteinander verbunden sein oder aber auch lediglich lose derart zusammengefügt sein, dass diese durch einen gemeinsamen Handhabungsvorgang an den Kettengliedern befestigbar sind.

Ferner können die Überbrückungselemente bei ausreichenden Kräften in Längsrichtung derselben gegenüber den Gelenkelementen und/oder Gliedern zumindest in gewissem Ausmaß längsverschieblich ausgeführt sein, so dass Zugbeanspruchungen oder eine irreversible Längung der Überbrückungselemente vermieden wird. Hierzu können die Überbrückungselemente im Presssitz an den Gelenkelementen und/oder Gliedern anliegen.

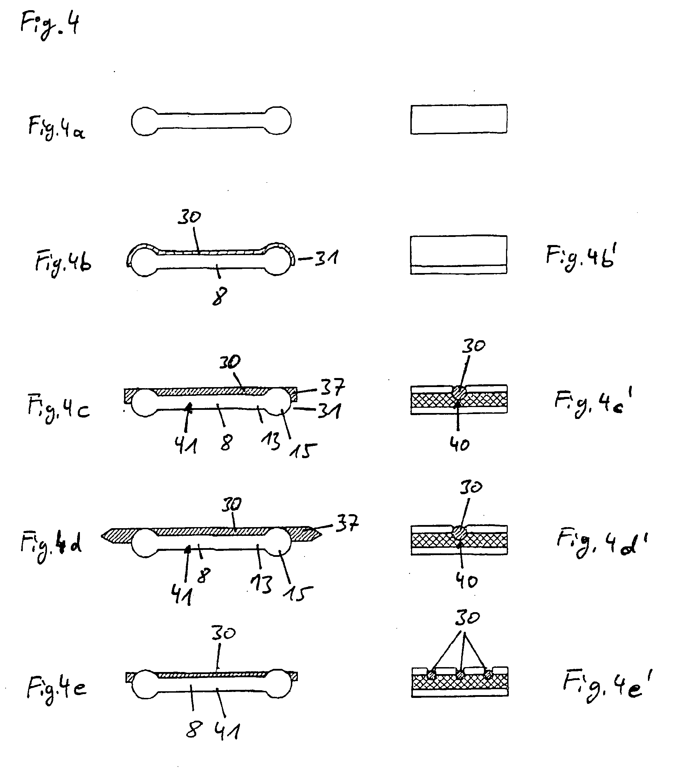

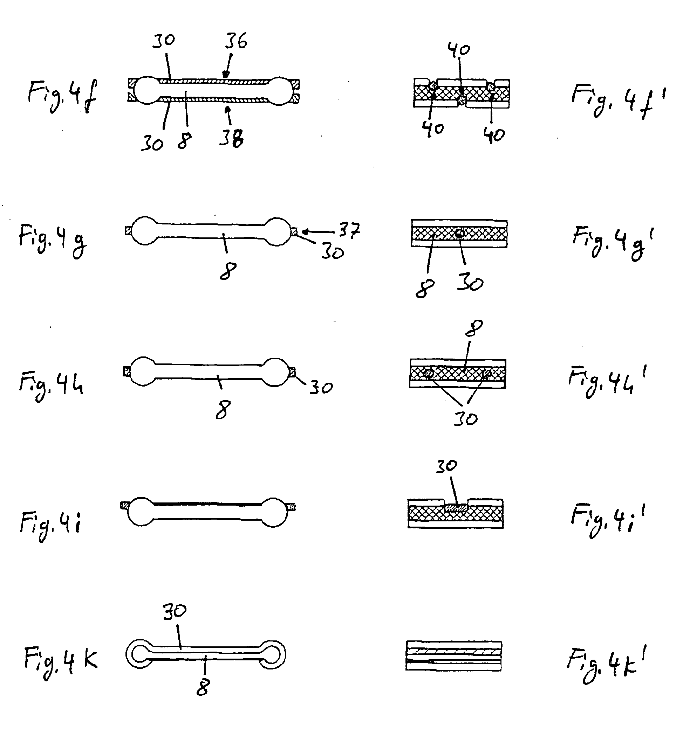

Figur 4 zeigt einige Abwandlungen von Gelenkelementen mit Überbrückungselementen.

Figur 4a zeigt eine beispielhafte Ausführung eines Gelenkelementes ohne Überbrückungselement.

Figur 4b zeigt ein Gelenkelement 8 mit Überbrückungselement 30, welches im Wesentlichen plattig ausgeführt ist und einseitig das Gelenkelement überdeckt und an beiden Stirnseiten 31 übergreift. Das Überbrückungselement weist hier dieselbe Breite auf wie das Gelenkelement, es kann jedoch auch eine geringere oder gegebenenfalls auch eine größere Breite aufweisen. Gelenkelement und Überbrückungselement können dauerhaft aneinander befestigt sein oder lediglich durch geeignete Passung vormontiert sein.

Die Figuren 4c und 4d zeigen ein Gelenkelement mit jeweils an beiden Stirnseiten 31 vorstehendem Überbrückungselement 30, wobei die vorstehenden Bereiche 37 Kontaktierungsbereiche mit den jeweiligen Kettengliedern darstellen. Das Überbrückungselement ist jeweils als Draht ausgeführt. Das Überbrückungselement ist jeweils kraft- und/oder formschlüssig in der eingeformten Vertiefung bzw. Rille 40 des Gelenkelementes angeordnet. Die Vertiefung kann sich lediglich über die Haltebereiche 13 und/oder die Querschnittserweiterungen 15 oder aber auch über den bei der Verschwenkung der Kettenglieder elastisch deformierten mittleren Bereich 41 erstrecken. Das Überbrückungselement schließt jeweils in der Höhe in etwa bündig mit dem Gelenkelement bzw. dessen Befestigungsbereichen ab. Zwischen den Befestigungsbereichen steht das Überbrückungselement in der Höhe vor, so dass auch hier eine Kontaktierung mit den jeweiligen Kettengliedern bzw. Anlageflächen der Laschen auf einfache Weise möglich ist. Die Kettenglieder können eben ausgeführt sein oder hierbei eine entsprechend eingeformte Rille zur Aufnahme des Überbrückungselementes aufweisen, so dass das Überbrückungselement hierdurch gleichzeitig das Gelenkelement gegen seitliche Verschiebungen sichert. Die vorstehenden Kontaktierungsbereiche des Überbrückungselementes können unterschiedlich ausgeführt sein, beispielsweise gerade abgelenkt (Figur 4c), sich zu den freien Enden hin verjüngend (Figur 4d).

Figur 4e zeigt ein Gelenkelement mit mehreren, hier drei, Überbrückungselementen 30, die einseitig an dem Gelenkelement angeordnet sind. Die Überbrückungselemente stehen jeweils stirnseitig an dem Gelenkelement vor, des Weiteren stehen sie an dem zwischen den Befestigungsbereichen zwischenliegenden mittleren Bereich 41 in der Höhe vor, um hier jeweils an dem zugeordneten Kettenglied elektrisch kontaktierend verbunden zu werden.

Bei der einseitigen Anordnung der Überbrückungselemente an dem Gelenkelement nach den Figuren 4c bis 4e ist das Überbrückungselement jeweils vorzugsweise an der Seite angeordnet, die im Umlenkbereich der Energieführungskette radial außen liegend angeordnet ist, gegebenenfalls jedoch auch an der radial innen liegenden Seite, d. h. der zum Krümmungsmittelpunkt hin gewandten Seite des Gelenkelementes.

Nach Figur 4f sind an Ober- und Unterseite 36, 38 des Gelenkelementes 8 Überbrückungselemente 30 in unterschiedlicher Anzahl angeordnet, die auch hier stirnseitig überstehende Kontaktbereiche 37 aufweisen. Ferner sind die Überbrückungselemente versetzt zueinander bzw. auf Lücke angeordnet, um keine zu starke Materialschwächung des Gelenkelementes zu ergeben. Auch hier sind die Überbrückungselemente in Vertiefungen bzw. Rillen 40 des Gelenkelementes angeordnet, wobei die Rillen mit Hinterschneidungen versehen sein können oder das Überbrückungselement jeweils im Presssitz in den Rillen gehaltert ist.

In Figur 4g ist das Überbrückungselement 30 von dem Gelenkelement 8 vollständig umschlossen, beispielsweise durch Umspritzen in einem Spritzgussverfahren und steht beidseitig von den Stirnseiten des Gelenkelementes vor, so dass hier nur die vorstehenden Bereiche 37 als Kontaktierungsbereiche zu dem jeweiligen Kettenglied ausgebildet sind. Nach Figur 4h können auch zwei oder mehrere Überbrückungselemente 30 von dem Gelenkelement umschlossen sein, wobei die Überbrückungselemente vorzugsweise voneinander seitlich beabstandet sind.

Nach Figur 4i ist das Überbrückungselement 30 bandförmig ausgebildet und steht auch hier zumindest in Teilbereichen in der Höhe und/oder an den Stirnseiten von dem Gelenkelement 8 vor.

Nach Figur 4k umschließt das Überbrückungselement 30 das Gelenkelement 8 an beiden Stirnseiten unter Ausbildung eines Formschlusses, so dass Gelenkelement und Überbrückungselement eine bauliche Einheit bilden. Das Überbrückungselement 30 kann beispielsweise seitlich auf das Gelenkelement aufgeschoben werden oder dessen Endbereiche werden umgebördelt. Das Überbrückungselement ist hierdurch sowohl in Längs- und/oder Querrichtung des Gelenkelementes formschlüssig an diesem befestigt. Gleichzeitig wird eine vergleichsweise große Kontaktierungsfläche zur kontaktierenden Verbindung mit dem jeweiligen Kettenglied bereitgestellt.

Es versteht sich, dass sich das Gelenkelement mit Überbrückungselement auch entsprechend abgewandelt werden kann, wenn sich dieses jeweils auch über mehrere Kettenglieder erstreckt. Das Überbrückungselement kann hierbei von den Verbindungsbereichen 13b (Fig. 3) zumindest teilweise unterstützt oder aufgenommen sein, wozu die Übergangsbereiche ebenfalls mit Rillen zur Aufnahme des Übergangselementes versehen sein können oder das Überbrückungselement umschließen können.

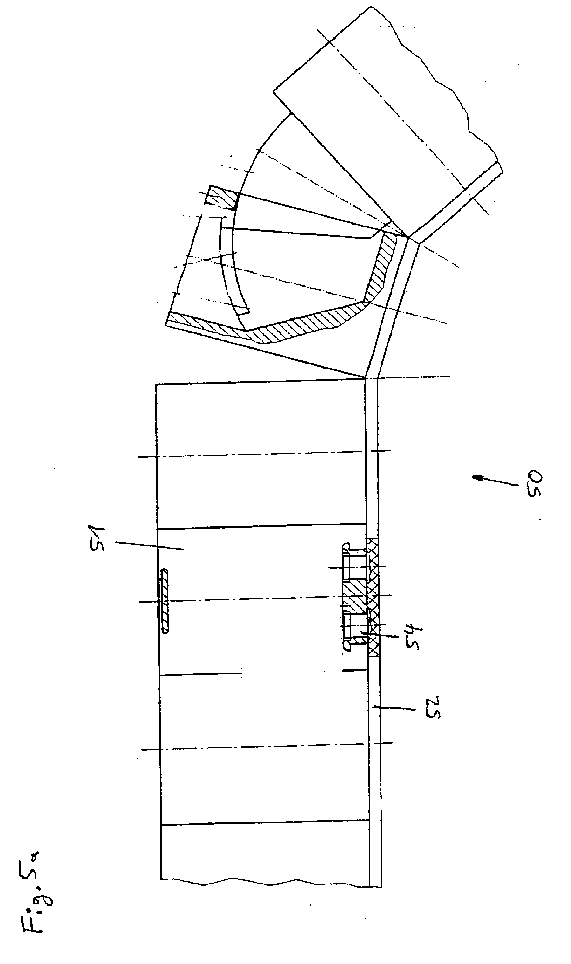

Figur 5a zeigt eine Energieführungskette 50, bei welcher die Glieder 51 auf einem Gelenkband 52 mittels der Rastvorsprünge 54 lösbar befestigt sind, wobei es sich versteht, dass auch eine einstückige Verbindung möglich ist. Das Gelenkband 52 kann mit der Außenseite 55 an den Querstegen und/oder den Bodenelementen 53 bzw. unteren Querstegen der Kettenglieder angeordnet sein, so dass dann, wenn das Obertrum auf dem Untertrum abgelegt ist, das Gelenkband 52 auf sich selber gleiten kann, wenn die Kette durchhängt. Gegebenenfalls kann das Gelenkband auch an der dem Ketteninneren zugewandten Seite der Bodenelemente befestigt sein.

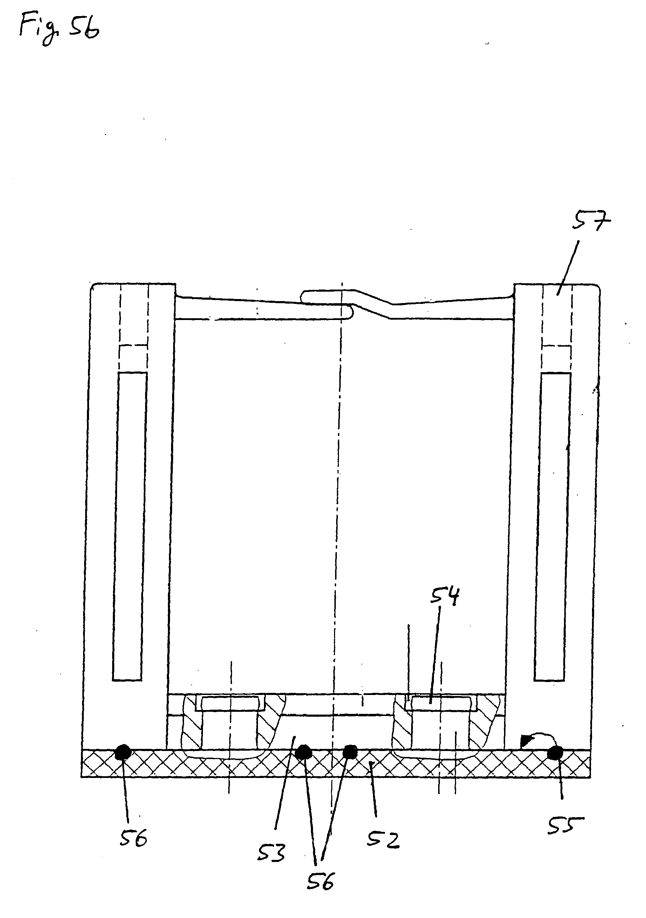

Wie in Figur 5b dargestellt, kann das Gelenkband 52 ebenfalls mit einem oder mehreren Überbrückungselementen 56 versehen sein, die sich ebenfalls in Kettenlängsrichtung erstrecken. Das Überbrückungselement kann hierbei die Länge des bandförmigen Gelenkelementes, gegebenenfalls auch die Länge der Energieführungskette insgesamt, aufweisen. Das Überbrückungselement steht auch hier vorzugsweise in der Höhe von dem Gelenkelement vor, um Kontaktierungsbereiche gegenüber den Kettengliedern bzw. den Bodenelementen bereitzustellen, die vorzugsweise lösbar an dem Gelenkelement befestigt sind. Gegebenenfalls können die Überbrückungselemente auch hier von dem bandförmigen Gelenkelement zumindest teilweise oder vollständig umschlossen sein. Die Überbrückungselemente können hierbei abschnittsweise an der Oberfläche des Gelenkelementes austreten oder vollständig über die gesamte Länge desselben von diesem umschlossen sein, wozu beispielsweise das Gelenkelement um die Überbrückungselemente umspritzt sein kann. Die Überbrückungselemente können auch, wie dargestellt, form- und/oder kraftschlüssig in Rillen oder Vertiefungen des Gelenkelementes und/oder der Bodenelemente oder Seitenlaschen 57 angeordnet sein und diese Elemente jeweils kontaktieren.

Es versteht sich, dass gegebenenfalls auch zwei bzw. mehrere Glieder nebeneinander an oder auf einem Gelenkband befestigbar sind, wobei die Glieder seitlich von dem Gelenkband überstehen können oder auch nicht und hierbei durch Überbrückungselemente, ähnlich wie in Figur 5 gezeigt, mit dem Gelenkband elektrisch leitend kontaktiert sind.

### Bezugszeichenliste

- 1: Energieführungskette
- 2: Kettenglied
- 3: Lasche
- 4a,4b: Quersteg
- 5: Untertrum
- 6: Umlenkbereich
- 7: Obertrum
- 8, 8a, 8b: Gelenkelement
- 9, 10: Seitenfläche
- 11: Ausnehmung
- 12: mittlerer Bereich
- 13,13a: Haltebereich
- 13b: Verbindungsbereich
- 14: Fläche
- 15: Querschnittserweiterung

- 30: Überbrückungselement
- 31: Stirnseite
- 32: angrenzender Bereich
- 33: kontaktierender Bereich

- 36: Oberseite
- 38: Unterseite
- 40: Rille
- 41: Mittlerer Bereich
- 50: Energieführungskette
- 51: Glied
- 52: Gelenkband
- 53: Bodenelement
- 54: Rastvorsprünge
- 55: Aussenseite
- 56: Überbrückungselement
- 57: Seitenlasche

## Patentansprüche

1. Gelenkelement (8; 8a) für eine Energieführungskette (1; 50) zur Führung von Schläuchen, Kabeln oder dergleichen mit einer Anzahl von Kettengliedern (2; 51), die gegenüberliegende Seitenlaschen (3; 57) aufweisen, wobei an zumindest einigen der Seitenlaschen (3; 57) obere und untere Querstege (4a, 4b) vorgesehen sind, wobei das Gelenkelement (8; 8a) mindestens zwei Haltebereiche (13, 13a) aufweist, die mit ihnen zuordenbaren benachbarten oder beabstandeten Kettengliedern (2; 51) verbindbar sind, um diese jeweils gelenkig miteinander zu verbinden, so dass die Energieführungskette (1; 50) unter Bildung eines Untertrums (5), eines Umlenkbereichs (6) und eines Obertrums (7) ablegbar ist, **dadurch gekennzeichnet, dass** an dem Gelenkelement (8; 8a) ein die jeweils mindestens zwei Haltebereiche (13, 13a) durchgehend überbrückendes Element (30; 56) aus einem Material angeordnet ist, dessen spezifische elektrische Leitfähigkeit größer als die des Gelenkelementmaterials ist, und das Überbrückungselement (30; 56) von dem Gelenkelement (8; 8a) in dessen Längsrichtung und/oder in der Höhe und/oder seitlich desselben vorsteht und über die vorstehenden Bereiche mit den beiden Kettengliedern (2; 51), die den beiden Haltebereichen (13, 13a) zuordenbar sind, elektrisch kontaktierend verbindbar ist.

2. Gelenkelement nach Anspruch 1, **dadurch gekennzeichnet, dass** das Überbrückungselement (30) das Gelenkelement (8; 8a) zumindest teilweise oberflächlich überdeckt und dass der überdeckende Bereich elektrisch kontaktierend mit einem Kettenglied (2) verbindbar ist.

3. Gelenkelement nach Anspruch 1 oder 2, **dadurch gekennzeichnet, dass** das Überbrückungselement (30; 56) zumindest teilweise in einer oder mehreren Vertiefungen des Gelenkelementes (8; 8a) eingelegt ist.

4. Gelenkelement nach einem der Ansprüche 1 bis 3, **dadurch gekennzeichnet , dass** das Überbrückungselement (30) zumindest über eine Teillänge oder die gesamte Länge von dem Gelenkelement (8; 8a) zumindest teilweise oder vollständig umschlossen ist und die vorstehende Bereiche bildet.

5. Gelenkelement nach einem der Ansprüche 1 bis 4, **dadurch gekennzeichnet, dass** in Montageanordnung an Ober- und Unterseite des Gelenkelementes (8; 8a) Überbrückungselemente (30) vorgesehen sind, die mit Kettengliedern (2) jeweils elektrisch kontaktierend verbindbar sind.

6. Gelenkelement nach einem der Ansprüche 1 bis 5, **dadurch gekennzeichnet, dass** die Überbrückungselemente (30) das Gelenkelement (8; 8a) an einer oder beiden Stirnseiten (31) übergreifen, vorzugsweise derart, dass das Überbrückungselement (30) unter Ausbildung eines Formschlusses an dem Gelenkelement (8; 8a) gehaltert ist.

7. Gelenkelement nach einem der Ansprüche 1 bis 6, **dadurch gekennzeichnet , dass** das jeweilige Überbrückungselement (30; 56) drahtförmig oder bandförmig ausgeführt ist.

8. Gelenkelement nach einem der Ansprüche 1 bis 7, **dadurch gekennzeichnet, dass** das Überbrückungselement (30; 56) aus einem metallischen Werkstoff besteht, wobei das Gelenkelement (8; 8a) vorzugsweise aus einem Kunststoffmaterial besteht.

9. Gelenkelement nach einem der Ansprüche 1 bis 8, **dadurch gekennzeichnet dass** das Überbrückungselement (30; 56) elastisch deformierbar oder plastisch deformierbar ausgeführt ist.

10. Gelenkelement nach einem der Ansprüche 1 bis 9, **dadurch gekennzeichnet, dass** das Gelenkelement (8) stegförmig oder bandförmig ausgeführt ist und an den Seitenlaschen (3) der Kettenglieder (2), vorzugsweise an seitlichen Einschnitten derselben, mit diesen elektrisch kontaktierend befestigbar ist.

11. Gelenkelement nach einem der Ansprüche 1 bis 9, **dadurch gekennzeichnet, dass** das Gelenkelement bandförmig ausgebildet ist und Haltebereiche (13; 13a) aufweist, die an den Querstegen (4a, 4b) der Kettenglieder (51) und/oder den Unterseiten (55) der Seitenlaschen (57) befestigbar sind, wobei das Gelenkelement auf der dem Inneren der Energieführungskette zugewandten oder der diesem abgewandten Seite der Querstege befestigbar ist.

12. Gelenkelement nach einem der Ansprüche 1 bis 11, **dadurch gekennzeichnet, dass** das Gelenkelement(8; 8a) lösbar an den Kettengliedern (2; 51) befestigbar oder einstückig mit diesen ausgebildet ist.

13. Energieführungskette (1; 50) zur Führung von Leitungen und Kabeln zwischen zwei Verbrauchern, von denen mindestens einer beweglich ist, wobei die Energieführungskette (1; 50) eine Vielzahl gelenkig miteinander verbundener Kettenglieder (2; 51) aufweist, die jeweils gegenüberliegende Seitenteile aufweisen und wobei an zumindest einigen oder sämtlichen der Kettenglieder (2; 51) die Seitenteile verbindende obere und/ oder untere Querstege (4a; 4b) vorgesehen sind, die einen Kabelführungskanal ausbilden, wobei die Kettenglieder (2; 51) jeweils über mindestens eine Gelenkverbindung miteinander verbunden sind, die eine Verschwenkung benachbarter Glieder zueinander unter Ausbildung eines Untertrums (5), eines Umlenkbereichs (6) und eines Obertrums (7) ermöglichen, und wobei die Glieder (2; 51) zumindest teilweise aus einem elektrisch leitfähigen Material bestehen, welches eine Ableitung von elektrischen Ladungen über zumindest einen Teil der Kettenlänge ermöglicht, **dadurch gekennzeichnet, dass** die Kettenglieder (2; 51) durch ein Gelenkelement (8; 8a) nach einem der Ansprüche 1 bis 12 derart miteinander verbunden sind, dass das Überbrückungselement jeweils benachbarte oder beabstandete Kettengliedern (2; 51) diese elektrisch kontaktierend miteinander verbindet.

14. Energieführungskette nach Anspruch 13, **dadurch gekennzeichnet, dass** das Überbrückungselement (30; 56) sich über mehrere Kettenglieder (2; 51) erstreckt und unter Ausbildung eines durchgehenden ununterbrochenen Leitfähigkeitspfades diese elektrisch kontaktierend miteinander verbindet.

15. Energieführungskette nach Anspruch 13 oder 14, **dadurch gekennzeichnet, dass** bei einer Verschwenkung der Kettenglieder (2; 51) gegeneinander die Kontaktierungsbereiche des Überbrückungselementes (30; 56) und/oder die Haltebereiche (13; 13a) des Gelenkelementes (8; 8a) gegenüber dem jeweils zugeordneten Kettenglied (2; 51) lageunveränderlich angeordnet sind.

## Claims

1. Joint element (8; 8a) for an energy guiding chain (1; 50) for guiding hoses, cables or the like, with a number of chain links (2; 51) displaying opposite side straps (3; 57), where upper and lower cross-members (4a, 4b) are provided on at least some of the side straps (3; 57), where the joint element (8; 8a) displays at least two mounting areas (13, 13a) that can be connected to associable adjacent or spaced chain links (2; 51) in order to connect them to each other in articulated fashion, so that the energy guiding chain (1; 50) can be deposited to form a lower strand (5), a deflection zone (6) and an upper strand (7), **characterized in that** a bridging element (30; 56), which continuously bridges the at least two mounting areas (13, 13a) and is made of a material whose specific electrical conductivity is greater than that of the joint element material, is located on the joint element(8; 8a), and **in that** the bridging element (30; 56) projects beyond the joint element (8; 8a) in its longitudinal direction and/or in its height and/or projects laterally beyond it and can be connected to the chain links (2; 51), which can be associated to the two mounting areas (13, 13a), in electrically contacting fashion by means of the projecting areas.

2. Joint element according to Claim 1, **characterized in that** the bridging element (30) at least partially covers the surface of the joint element (8; 8a), and **in that** the covering area can be connected to a chain link (2) in electrically contacting fashion.

3. Joint element according to Claim 1 or 2, **characterized in that** the bridging element (30; 56) is at least partly inserted in one or more recesses in the joint element (8; 8a).

4. Joint element according to one of Claims 1 to 3, **characterized in that** the bridging element (30) is at least partly, or completely, surrounded by the joint element (8; 8a) over part of its length or its full length and forms the projecting areas.

5. Joint element according to one of Claims 1 to 4, **characterized in that,** in assembled state, bridging elements (30) are provided on the upper and lower side of the joint element (8; 8a), being connectable in each case to chain links (2) in electrically contacting fashion.

6. Joint element according to one of Claims 1 to 5, **characterized in that** the bridging elements (30) reach over the joint element (8; 8a) at one or both face ends (31), preferably in such a way that the bridging element (30) is retained on the joint element (8; 8a) by forming a positive fit.

7. Joint element according to one of Claims 1 to 6, **characterized in that** the respective bridging element (30; 56) is designed in the form of a wire or a strip.

8. Joint element according to one of Claims 1 to 7, **characterized in that** the bridging element (30; 56) is made of a metallic material, where the joint element (8; 8a) is preferably made of a plastic material.

9. Joint element according to one of Claims 1 to 8, **characterized in tha**t the bridging element (30; 56) is of elastically deformable or plastically deformable design.

10. Joint element according to one of Claims 1 to 9, **characterized in that** the joint element (8) is of web-like or strip-like design and can be fastened to the side straps (3) of the chain links (2), preferably in lateral recesses thereof, in electrically contacting fashion.

11. Joint element according to one of Claims 1 to 9, **characterized in that** the joint element is of strip-like design and displays mounting areas (13; 13a) that can be fastened to the cross-members (4a, 4b) of the chain links (51) and/or to the undersides (55) of the side straps (57), where the joint element can be fastened to the side of the cross-members facing towards the inside of the energy guiding chain, or to the side facing away from it.

12. Joint element according to one of Claims 1 to 11, **characterized in that** the joint element (8; 8a) can be fastened to the chain links (2; 51) in detachable fashion, or is designed in one piece with them.

13. Energy guiding chain (1; 50) for guiding lines and cables between two consumers, at least one of which is moveable, where the energy guiding chain (1; 50) displays a plurality of chain links (2; 51) connected to each other in articulated fashion, each of which displays opposite side straps, and where upper and/or lower cross-members (4a; 4b) connecting the side straps and forming a cable guiding duct are provided on at least some or all of the chain links (2; 51), where the chain links (2; 51) are in each case connected to each other via at least one hinge joint that permits pivoting of adjacent links relative to each other, forming a lower strand (5), a deflection zone (6) and an upper strand (7), and where the links (2; 51) at least partly consist of an electrically conductive material that enables the discharge of electrical charges over at least part of the chain length, **characterized in that** the chain links (2; 51) are connected to each other by a joint element (8; 8a) according to one of Claims 1 to 12 in such a way that the bridging element in each case connects adjacent or spaced chain links (2; 51) to each other in electrically contacting fashion.

14. Energy guiding chain according to Claim 13, **characterized in that** the bridging element (30; 56) extends over several chain links (2; 51) and connects them to each other in electrically contacting fashion, forming a continuous, uninterrupted conduction path.

15. Energy guiding chain according to Claim 13 or 14, **characterized in that**, in the event of pivoting of the chain links (2; 51) relative to each other, the contacting areas of the bridging element (30; 56) and/or the mounting areas (13; 13a) of the joint element (8; 8a) are arranged immovably relative to the respectively associated chain link (2; 51).

## Revendications

1. Élément d'articulation (8 ; 8a) pour une chaîne de transmission d'énergie (1 ; 50) destiné au guidage de tuyaux, de câbles ou d'autres choses semblables, avec un nombre de chaînons (2 ; 51) ayant des pattes latérales opposées (3 ; 57), des traverses supérieures et inférieures (4a, 4b) étant prévues sur au moins quelques des pattes latérales (3 ; 57), l'élément d'articulation (8 ; 8a) comportant au moins deux zones de support (13, 13a) qui peuvent être reliées avec des chaînons (2 ; 51) adjacents ou écartés coordonnables pour les articuler respectivement de sorte que la chaîne de transmission d'énergie (1 ; 50) peut être déposée sous formation d'un brin inférieur (5), d'une zone de renvoi (6) et d'un brin supérieur (7), **caractérisé en ce que** sur l'élément d'articulation (8 ; 8a) est arrangé un élément (30 ; 56) qui ponte les au moins deux zones de support (13, 13a) respectives d'une manière continue et qui consiste en un matériau dont la conductivité électrique est supérieure à celle du matériau de l'élément d'articulation, et **en ce que** l'élément formant pont (30 ; 56) fait saillie de l'élément d'articulation (8 ; 8a) en la direction longitudinale et/ou en hauteur et/ou latéralement duquel et peut être relié avec les deux chaînons (2 ; 51) coordonnables aux deux zones de support (13, 13a), d'une manière contactant électriquement par l'intermédiaire des parties saillantes.

2. Élément d'articulation selon la revendication 1, **caractérisé en ce que** l'élément d'articulation (8 ; 8a) est recouvert de l'élément faisant pont (30) au moins partiellement et superficiellement et **en ce que** la zone recouvrant peut être reliée avec un chaînon (2) d'une manière contactant électriquement.

3. Élément d'articulation selon la revendication 1 ou 2, **caractérisé en ce que** l'élément faisant pont (30 ; 56) est mis en placé au moins partiellement dans un ou plusieurs cavités de l'élément d'articulation (8 ; 8a).

4. Élément d'articulation selon l'une des revendications 1 à 3, **caractérisé en ce que** l'élément faisant pont (30) est entouré de l'élément d'articulation (8 ; 8a) au moins partiellement ou entièrement sur au moins une longueur partielle ou sur la longueur totale et forme les parties saillantes.

5. Élément d'articulation selon l'une des revendications 1 à 4, **caractérisé en ce que**, dans l'arrangement de montage, des éléments faisant pont (30) et pouvant être reliés avec des chaînons (2) d'une manière contactant électriquement sont prévus sur la face supérieure et la face inférieure de l'élément d'articulation (8 ; 8a).

6. Élément d'articulation selon l'une des revendications 1 à 5, **caractérisé en ce que** les éléments faisant pont (30) chevauchent l'élément d'articulation (8 ; 8a) sur l'un ou sur les deux fronts (31), de préférence de telle sorte que l'élément faisant pont (30) est supporté sur l'élément d'articulation (8 ; 8a) sous formation d'une fermeture géométrique.

7. Élément d'articulation selon l'une des revendications 1 à 6, **caractérisé en ce que** l'élément faisant pont (30 ; 56) respectif est en forme de fil ou en forme de bande.

8. Élément d'articulation selon l'une des revendications 1 à 7, **caractérisé en ce que** l'élément faisant pont (30 ; 56) consiste en un matériau métallique tandis que l'élément d'articulation (8 ; 8a) consiste de préférence en matière plastique.

9. Élément d'articulation selon l'une des revendications 1 à 8, **caractérisé en ce que** l'élément faisant pont (30 ; 56) est agencé d'une manière déformable élastiquement ou plastiquement.

10. Élément d'articulation selon l'une des revendications 1 à 9, **caractérisé en ce que** l'élément d'articulation (8) est agencé en forme d'âme ou en forme de bande et peut être fixé sur les pattes latérales (3) des chaînons (2), de préférence sur des incisions latérales desquelles, d'une manière contactant électriquement.

11. Élément d'articulation selon l'une des revendications 1 à 9, **caractérisé en ce que** l'élément d'articulation est agencé en forme de bande et comporte des zones de support (13 ; 13a) qui peuvent être fixées sur les traverses (4a, 4b) des chaînons (51) et/ou sur les faces inférieures (55) des pattes latérales (57) tandis que l'élément d'articulation est fixable sur le côté des traverses tourné vers ou détourné de l'intérieur de la chaîne de transmission d'énergie.

12. Élément d'articulation selon l'une des revendications 1 à 11, **caractérisé en ce que** l'élément d'articulation (8 ; 8a) est fixable sur les chaînons (2 ; 51) de manière détachable ou est formé en une partie avec lesdits chaînons.

13. Chaîne de transmission d'énergie (1 ; 50) pour le guidage de conduites et câbles entre deux consommateurs dont l'un au moins est mobile, la chaîne de transmission d'énergie (1 ; 50) comportant une pluralité de chaînons (2 ; 51) articulés l'un à l'autre, chacun comportant des éléments latéraux respectivement opposés, et des traverses supérieures et/ou inférieures (4a ; 4b) reliant les éléments latéraux étant prévues sur au moins quelques ou toutes les chaînons (2 ; 51), lesdites traverses formant une canal de guidage de câble, les chaînons (2 ; 51) étant respectivement reliés l'un avec l'autre par au moins un assemblage articulé permettant un pivotement des chaînons adjacents l'un par rapport à l'autre sous formation d'un brin inférieur (5), d'une zone de renvoi (6) et d'un brin supérieur (7), et les chaînons (2 ; 51) consistant au moins partiellement en un matériau conducteur permettant la décharge conductrice sur au moins une partie de la longueur de la chaîne, **caractérisé en ce que** les chaînons (2 ; 51) sont reliés l'un avec l'autre par un élément d'articulation (8 ; 8a) de sorte que l'élément formant pont connecte les chaînons respectivement adjacents ou écartés (2 ; 51) d'une manière contactant électriquement.

14. Chaîne de transmission d'énergie selon la revendication 13, **caractérisée en ce que** l'élément formant pont (30 ; 56) s'étend sur plusieurs de chaînons (2 ; 51) en reliant lesdits chaînons d'une manière contactant électriquement sous formation d'un chemin de conductibilité continu et ininterrompu.

15. Chaîne de transmission d'énergie selon la revendication 13 ou 14, **caractérisée en ce que** lors d'un pivotement des chaînons (2 ; 51) l'un contre l'autre, les zones de contact de l'élément formant pont (30 ; 56) et/ou les zones de support (13 ; 13a) de l'élément d'articulation (8 ; 8a) sont arrangées fixe en position par rapport au chaînon (2 ; 51) respectivement coordonné.
